# EUROPÄISCHE PATENTSCHRIFT

(11) **EP 3 458 332 B1**
(45) Veröffentlichungstag und Bekanntmachung des Hinweises auf die Patenterteilung: **13.01.2021**
(21) Anmeldenummer: 17723347.5
(22) Anmeldetag: 11.05.2017
(51) Int. Cl.: B61G 11/18, B61L 15/00, B61G 7/14, G01B 7/14, H02K 35/00

(54) **ÜBERWACHUNG EINES HORIZONTALEN DÄMPFUNGSELEMENTS FÜR EIN SCHIENENFAHRZEUG**
MONITORING OF A HORIZONTAL DAMPING ELEMENT FOR A RAIL VEHICLE
SURVEILLANCE D'UN ÉLÉMENT D'AMORTISSEMENT HORIZONTAL POUR VÉHICULE FERROVIAIRE

(30) Priorität: 17.05.2016 DE 102016208377
(43) Veröffentlichungstag der Anmeldung: 27.03.2019
(73) Patentinhaber: Voith Patent GmbH, 89522 Heidenheim (DE)
(72) Erfinder: HOMANN, Matthias, 38104 Braunschweig (DE)
(74) Vertreter: Voith Patent GmbH - Patentabteilung
(86) Internationale Anmeldenummer: PCT/EP2017/061250
(87) Internationale Veröffentlichungsnummer: WO 2017/198520

(56) Entgegenhaltungen:
- WO-A1-2006/046937
- WO-A1-2014/124848
- WO-A2-2006/127500

## Beschreibung

### Technisches Gebiet

Die Erfindung betrifft ein System und ein Verfahren zur Überwachung eines Dämpfungselements für ein Schienenfahrzeug, sowie ein entsprechendes Computerprogrammprodukt.

### Stand der Technik

Ein Schienenfahrzeug, beispielsweise eine Lokomotive, umfasst ein horizontal wirkendes Dämpfungs- oder Energieverzehrelement, über das Fahr- oder Aufprallkräfte übertragen werden können. Das Dämpfungselement kann insbesondere zur Kopplung mit einem anderen Schienenfahrzeug, beispielsweise einer anderen Lokomotive oder einem Eisenbahnwagen, eingerichtet sein, etwa in Form eines Rohrs, das eine Kupplung mit dem Schienenfahrzeug verbindet. In einer anderen Ausführungsform ist das Dämpfungselement dazu eingerichtet, einen Aufprall auf ein Objekt abzudämpfen.

Ein mehrfach verwendbares Dämpfungselement kann praktisch beliebig oft komprimiert oder expandiert werden, dabei kann eine Dämpfung etwa hydraulisch, pneumatisch oder über Reibkräfte bewirkt werden. Ein Einweg-Dämpfungselement verformt sich bei einer vorbestimmten Belastung und wird danach üblicherweise nicht zurückverformt, sondern ausgetauscht. Um eine stets sichere Funktion des Dämpfungselements sicher zu stellen, muss es regelmäßig auf Schäden oder Verschleiß überwacht werden.

WO 2014/124848 schlägt vor, Dämpfungsbewegungen eines Dämpfungselements abzutasten und zu analysieren.

JP 2008 254578 A betrifft eine Überwachung von Dämpfungselementen zwischen Eisenbahnwagen.

WO 2010 / 059026 betrifft ein Überwachungssystem für ein Kraftfahrzeug. Ein bewegliches Teil ist mit einer Einheit zur Energieerzeugung gekoppelt, die aufgrund der Bewegung einerseits Energie zum Betrieb des Überwachungssystems bereitstellt, und andererseits ein Messsignal, das auf die Bewegung des Teils hinweist.

Es ist Aufgabe der vorliegenden Erfindung, eine verbesserte Technik zur Überwachung eines Dämpfungselements an einem Schienenfahrzeug bereitzustellen. Die Erfindung löst diese Aufgabe mittels der Gegenstände der unabhängigen Ansprüche. Unteransprüche geben bevorzugte Ausführungsformen an.

### Offenbarung der Erfindung

Ein Dämpfungselement für ein Schienenfahrzeug umfasst einen ersten Abschnitt zur Befestigung am Schienenfahrzeug und einen zweiten Abschnitt zur Einleitung einer horizontal auf das Schienenfahrzeug wirkenden Kraft. Ein Überwachungssystem für das Dämpfungselement umfasst einen am Dämpfungselement angebrachten Sensor zur Abtastung einer Änderung eines Abstands des ersten vom zweiten Abschnitt; einen Datenspeicher; eine Verarbeitungseinrichtung, die dazu eingerichtet ist, Informationen bezüglich der Änderung des Abstands zu bestimmen und im Datenspeicher abzulegen; sowie eine lokale Energieversorgungseinrichtung Energiespeicher zur autarken Versorgung der Verarbeitungseinrichtung.

Das Überwachungssystem kann universell an einem Dämpfungselement eines beliebigen Schienenfahrzeugs eingesetzt und so ausgestaltet sein, dass eine lückenlose Überwachung des Dämpfungselements über einen langen Zeitraum gewährleistet ist. Dieser Zeitraum kann im Bereich von mehreren Wochen, Monaten oder sogar Jahren liegen. Unter Einsatz energiesparender Elemente kann die lokale Energieversorgungseinrichtung als handelsübliche Kleinbatterie, etwa mit einer oder mehrerer Zellen des AA- oder AAA-Formats ausgeführt sein.

Das Überwachungssystem kann dadurch klein, leicht und wartungsarm aufgebaut sein, sodass es verbessert flexibel eingesetzt werden kann. Der Datenspeicher oder der Sensor können ebenfalls mittels Energie aus der Energieversorgungseinrichtung betrieben werden. In einer Ausführungsform ist das Überwachungssystem in einem Innenraum des Dämpfungselements angeordnet, wo es verbessert vor Umwelteinflüssen geschützt sein kann. Das Überwachungssystem kann ohne Einschränkung auch an einem energielosen, beispielsweise einem nicht elektrifizierten Schienenfahrzeug eingesetzt werden und nicht von einem Betriebszustand des Schienenfahrzeugs abhängig sein. Die Überwachung des Dämpfungselements kann daher gleichermaßen an einem fahrenden oder stillstehenden, einem an- oder abgekoppelten Schienenfahrzeug durchgeführt werden.

Durch die lokale, autarke Versorgung der Energieversorgungseinrichtung kann der Energiebedarf des Überwachungssystems lokal gedeckt werden, auf eine externe Energiezufuhr kann verzichtet werden. Das Überwachungssystem kann dadurch leichter am Dämpfungselement angebracht werden. Insbesondere kann keine Kabelverbindung zum Überwachungssystem erforderlich sein, sodass eine mechanische Schwächung des Dämpfungselements durch eine Aussparung zur Kabeldurchführung vermieden werden kann. Das Dämpfungsverhalten des Dämpfungselements kann auch unter sehr hohen Belastungen, beispielsweise bei einem Zusammenstoß des Schienenfahrzeugs mit einem anderen Schienenfahrzeug, unverändert sein.

Die Energieversorgungseinrichtung umfasst einen Generator zur Bereitstellung elektrischer Energie auf der Basis einer Relativbewegung der Abschnitte. Damit kann ausgenutzt werden, dass im Betrieb des Schienenfahrzeugs am Dämpfungselement praktisch permanent mechanische Energie in Form einer Relativbewegung der Abschnitte anfällt. Diese Energie kann leicht lokal in elektrische Energie umgewandelt und werden, um das Überwachungssystem zur Überwachung des Dämpfungselement zu betreiben.

Die Aufgabe des Dämpfungselements besteht im Allgemeinen darin, eine Bewegung zwischen dem Schienenfahrzeug und einem anderen Objekt zu dämpfen und gegebenenfalls zu verringern. Insbesondere kann das Dämpfungselement zwischen Wagen eines Zugs angebracht sein. Wegen dieser Aufgabe und weil die zum Betrieb des Überwachungssystems erforderliche Energie um viele Größenordnungen kleiner als die anfallende mechanische Energie ist, stört das Umwandeln dieser Bewegung in elektrische Energie den Betrieb des Schienenfahrzeugs nicht. Das Dämpfungselement ist üblicherweise groß und schwer und kann häufig nicht leicht gewartet werden, ohne es wenigstens teilweise vom Schienenfahrzeug zu entfernen, womit ein erheblicher Aufwand verbunden sein kann. Das Überwachungssystem kann mithilfe des Generators für längere Zeit autark arbeiten, sodass das Überwachungssystem wartungsarm oder sogar wartungsfrei sein kann. Das Überwachungssystem kann am oder im Dämpfungselement angebracht sein.

Das Bereitstellen elektrischer Energie mittels eines Generators ist auch als energy-harvesting ("Energie-Ernten") bekannt. Bevorzugt ist die Bereitstellung getrennt vom Sensor zur Bestimmung der Relativbewegung ausgeführt. So kann der Sensor möglichst betriebssicher ausgeführt sein, während der Generator möglichst effizient ausgeführt werden kann. Die hierfür unterschiedlichen Anforderungen können so verbessert erfüllt werden.

Der Generator ist zur induktiven Umwandlung mechanischer in elektrische Energie eingerichtet und umfasst eine Spule, die zur Anbringung am ersten Abschnitt eingerichtet ist, und einen Magneten, der zur Anbringung am zweiten Abschnitt eingerichtet ist. Der Magnet umfasst bevorzugt einen Permanentmagneten und die Spule ist bevorzugt so dimensioniert, dass bei einer zu erwartenden Relativbewegung, beispielsweise wenn das Dämpfungselement zwischen einzelnen Wagen oder Wagons eines Zugs angebracht ist und der Zug auf eine vorbestimmte Weise gefahren wird, ausreichend elektrische Energie zum Betrieb des Überwachungssystems umgewandelt werden kann. Die bereitstellbare Energie kann durch eine Anzahl oder Stärke von Magneten oder eine Anzahl oder Windungszahl von Spulen gesteuert werden. Der induktive Generator kann robust und störungsunempfindlich realisiert werden. Zum Aufbau können Standardkomponenten verwendet werden.

Der Sensor ist zur Bestimmung eines Magnetfelds und zur Anbringung am ersten Abschnitt eingerichtet, wobei ferner ein Magnet vorgesehen sein kann, der zur Anbringung am zweiten Abschnitt eingerichtet ist. Ein Magnet, der den Sensor beeinflusst, und ein Magnet, der vom Generator umfasst ist, können baugleich sein. Es wird vorgeschlagen, denselben Magneten zur Betätigung des Sensors und zur Beeinflussung der Spule zu verwenden.

Das Sensorsystem kann ein erstes Trägerelement umfassen, an dem wenigstens eine Spule und wenigstens ein Sensor angebracht sind, wobei das erste Trägerelement zur Anbringung an einem der Abschnitte eingerichtet ist. Der Sensor, die Spule und das erste Trägerelement können als separat handhabbare Einheit vorliegen und leichter, schneller oder genauer am Dämpfungselement angebracht, gewartet oder von ihm entfernt werden.

Es kann ein zweites Trägerelement vorgesehen sein, an dem der wenigstens ein Magnet angebracht ist, wobei das zweite Trägerelement zur Anbringung an einem der Abschnitte eingerichtet ist. Auch hier kann eine separat handhabbare Einheit gebildet sein, die verbessert am Dämpfungselement montiert oder demontiert werden kann.

Es können mehrere Magneten und mehrere Spulen vorgesehen sein, wobei relative Abstände zwischen den Magneten ungleich relativen Abständen der Spulen, jeweils in Bewegungsrichtung der Abschnitte, sind. Insbesondere können die Magneten und Spulen jeweils derart entlang einer Bewegungsrichtung angebracht sein, dass zumindest auf einem vorbestimmten Betätigungsweg stets nur ein Abstand zwischen einer Spule und einem Magneten minimal ist. Anders ausgedrückt können minimale Abstände zwischen Magneten und Spulen nacheinander an unterschiedlichen Spulen eingestellt werden. Dadurch kann eine an den Spulen induzierte Spannung über die Bewegung konstanter gehalten werden, das Aufbauen von Spannungsspitzen, die zum Betreiben des Überwachungssystems schwierig zu handhaben sein können, kann reduziert sein.

Ferner kann ein Energiespeicher umfasst sein, der dazu eingerichtet ist, mittels des Generators bereitgestellte Energie vorübergehend zu speichern. Der Energiespeicher kann über die Zeit unterschiedlich großes Energieaufkommen oder schwankende Energieaufnahme durch das Überwachungssystem ausgleichen. Außerdem kann mittels des Energiespeichers eine Periode ausbleibender Energieernte überbrückt werden. In einer weiteren Ausführungsform sind ein aufladbarer und ein Einweg-Energiespeicher vorgesehen. Der Einweg-Energiespeicher kann verbessert Energie über einen längeren Zeitraum, beispielsweise mehrere Jahre, bereitstellen, um zumindest einen energiesparenden Minimalbetrieb des Überwachungssystems sicher zu stellen, wenn der Generator nicht in Betrieb und der aufladbare Energiespeicher erschöpft ist.

Weiter kann ein Umsetzer bereitgestellt sein, der dazu eingerichtet ist, die mittels des Generators bereitgestellte elektrische Energie aufzubereiten. Die Aufbereitung kann insbesondere eine Anpassung von Strom, Spannung, Polarität und Welligkeit beinhalten. Das Überwachungssystem kann dadurch leichter eine stromsparende, aber elektrisch empfindliche Komponente, insbesondere einen Mikrocomputer oder Mikrocontroller, umfassen.

Das Dämpfungselement ist üblicherweise dazu eingerichtet, eine den Abstand der Abschnitte ändernde Energie auf vorbestimmte Weise abzubauen. In einer Ausführungsform ist das Dämpfungselement zur Aufnahme von Übertragungskräften zu einem anderen Schienenfahrzeug eingerichtet. Insbesondere kann das Dämpfungselement integriert mit einem Verbindungsrohr zwischen einer Kupplung, etwa einer Scharfenbergkupplung, und einem Chassis des Schienenfahrzeugs ausgebildet sein. In einer anderen Ausführungsform ist das Dämpfungselement als Puffer ausgebildet oder mit einem Puffer verbunden, um einen Stoß zwischen dem Schienenfahrzeug und einem anderen Schienenfahrzeug oder einem feststehenden Objekt zu dämpfen.

Das Dämpfungselement kann zur regenerativen Dämpfung eingerichtet sein, wobei eine eingeleitete Kraft gespeichert und in umgekehrter Richtung zurückgegeben wird. Hierzu kann das Dämpfungselement ein elastisches Federelement umfassen. Das Dämpfungselement kann auch zur destruktiven Dämpfung eingerichtet sein, wobei die aufgenommene Energie nicht als Bewegung zurückgegeben, sondern in eine andere Energieform wie Wärme oder Verformungsenergie umgewandelt wird. Vorwiegend destruktive Dämpfungselemente können auch Crashbox, Crashpuffer oder Crashelement genannt werden. Allgemein kann die Dämpfung beispielsweise mittels Hydraulik, Pneumatik, Reibung oder mittels eines Verformens, Berstens oder Reißens eines im Kraftfluss liegenden Elements bewirkt werden. Ein reales Dämpfungselement realisiert üblicherweise eine vorbestimmte Mischform aus destruktiver und regenerativer Dämpfung. Auf der Basis der abgelegten Daten kann eine Analyse des Dämpfungsverhaltens des Bewegungsdämpfers erfolgen. Dadurch kann ein ordnungsgemäßer Zustand des Bewegungsdämpfers sicher gestellt werden. Durch Vergleich von korrespondierenden Informationen von Bewegungsdämpfern an verschiedenen Schienenfahrzeugen kann ein Alterungsverhalten der Bewegungsdämpfer statistisch analysiert werden. Im Fall eines Unfalls des Schienenfahrzeugs kann eine Analyse des Unfallgeschehens auf der Basis der abgelegten Informationen erleichtert sein. Die abgelegten Informationen können auch zu einem Zeitpunkt lange nach ihrer Aufzeichnung noch verfügbar sein.

Es ist bevorzugt, dass der Sensor dazu eingerichtet ist, ein binäres Signal bereitzustellen, das sich ändert, wenn sich der Abstand zwischen dem ersten und dem zweiten Abschnitt verändert. Das binäre Signal kann insbesondere mittels eines passiven Sensors erzeugt werden, der keine eigene Energieaufnahme aufweist, solange das binäre Signal einen vorbestimmten Pegel (in der Regel LOW bzw. 0) einnimmt. Befindet sich das Dämpfungselement in einem Ruhezustand, insbesondere wenn die auf das Element wirkende Kraft unter einem vorbestimmten Schwellenwert liegt, so stellt der Sensor bevorzugt diesen Pegel bereit. Die Energieaufnahme des Überwachungssystems kann dadurch sehr gering gehalten werden, sodass eine Einsatzzeit des Überwachungssystems verlängert sein kann. Ein derartiger Sensor kann beispielsweise einen Schalter, insbesondere einen Magnetschalter umfassen, der bei Verlassen des Ruhezustands eine elektrische Verbindung zur Energieversorgung herstellt.

Die Verarbeitungseinrichtung weist bevorzugt einen Interrupteingang auf, an den das binäre Signal geführt ist, wobei die Verarbeitungseinrichtung dazu eingerichtet ist, aufgrund eines Interrupt von einem Ruhezustand in einen Verarbeitungszustand versetzt zu werden, um die Informationen zu verarbeiten. Die Verarbeitungseinrichtung kann als programmierbarer Mikrocomputer oder Mikrocontroller ausgeführt sein. Dabei kann die Verarbeitungseinrichtung zwei oder mehr Betriebszustände unterstützen, die sich in der Verarbeitungsleistung und der Energieaufnahme unterscheiden. Die Verarbeitungseinrichtung kann in einem energiesparenden Ruhezustand einen Strom von nur wenigen Mikroampere (µA) aufnehmen, beispielsweise ca. 0,4 µA bei Einsatz eines Mikrocomputers aus der MSP430 Familie. Der Mikrocomputer kann in einen weniger energiesparenden Verarbeitungszustand wechseln, wenn ein Signal an einem Interrupteingang einen vorbestimmten Pegel annimmt (pegelgesteuerter Interrupt) oder wenn der Pegel an einem Interrupteingang eine fallende oder steigende Flanke aufweist (flankengesteuerter Interrupt). Im Verarbeitungszustand können der Sensor abgetastet und die Informationen bestimmt oder abgelegt werden. Sind länger als eine vorbestimmte Zeit keine Änderungen der Sensorsignale zu verzeichnen, kann wieder der Ruhezustand eingenommen werden.

In einer Ausführungsform ist eine Dämpfungskonstante des Dämpfungselements auf Abschnitten des Abstands unterschiedlich, wobei der Sensor dazu eingerichtet ist, ein Überschreiten eines Abstandsabschnitts abzutasten. So kann das Überschreiten von Äquivalenzbereichen, in denen sich das Dämpfungselement einheitlich verhält, festgehalten werden. Beispielsweise kann ein erster Äquivalenzbereich einem Stillstand des Schienenfahrzeugs, ein zweiter einem Fahrbetrieb, ein dritter einer zulässigen Lastspitze und ein dritter einer schädigenden Lastspitze zugeordnet sein. Jedem Äquivalenzbereich kann eine andere Dämpfungskonstante der Dämpfungseinrichtung zugeordnet sein. Eine Lebensdauer oder eine Funktionsfähigkeit des Dämpfungselements können vom Betrieb des Dämpfungselements in den verschiedenen Äquivalenzbereichen abhängig sein, sodass durch das Bestimmen, in welchem Äquivalenzbereich das Dämpfungselement in welcher Weise betrieben wurde, eine verbesserte Aussage über die allgemeine Einsatzfähigkeit des Dämpfungselements ermöglicht sein kann.

Bevorzugt sind zwei binäre (digital zweiwertige) Sensoren vorgesehen, deren abstandsabhängige Signale phasenverschoben sind, wobei die Verarbeitungseinrichtung dazu eingerichtet ist, auf der Basis der Signale der Sensoren eine Bewegungsrichtung der Abschnitte zu bestimmen. Mittels zweier binärer Sensoren können vier verschiedene Abstände der Abschnitte des Dämpfungselements unterschieden werden. Durch eine Betrachtung der Reihenfolge der Übergänge der Signale der Sensoren können eine Zugbelastung und eine Schubbelastung des Dämpfungselements bestimmt und voneinander getrennt überwacht werden.

Weiter bevorzugt umfasst das Überwachungssystem einen Zeitgeber, wobei die Verarbeitungseinrichtung dazu eingerichtet ist, Informationen bezüglich einer Geschwindigkeit oder eines Zeitpunkts der Änderung des Abstands zu bestimmen und im Datenspeicher abzulegen. Der Zeitgeber kann eine relative Zeit zwischen Ereignissen - etwa Änderungen des Pegels eines Sensors - in einer beliebigen Einheit angeben, beispielsweise als Zählerstand eines verwendeten Frequenznormals. Bevorzugt stellt der Zeitgeber jedoch eine absolute Zeit bereit, beispielsweise als Kombination eines Datums mit einer Angabe von Stunden, Minuten und Sekunden, sodass eine zeitliche Korrelation einer Information mit einem externen Ereignis erleichtert sein kann. Ein solches Ereignis kann Informationen eines Dämpfungselements eines anderen Schienenfahrzeugs umfassen, das beispielsweise mit dem ersten Schienenfahrzeug gekoppelt sein kann. Der Zeitgeber kann ebenfalls unterschiedliche Energiemodi unterstützen, sodass die Energieaufnahme des Überwachungssystems durch den stets weiterlaufenden Zeitgeber nur wenig gesteigert sein kann. Zum Bereitstellen einer aktuellen Zeitinformation kann der Zeitgeber von einem Ruhezustand in einen Verarbeitungszustand versetzt werden.

In noch einer weiteren Ausführungsform umfasst das Überwachungssystem eine Kommunikationseinrichtung zur Bereitstellung von im Datenspeicher abgelegten Informationen an einer Schnittstelle, wobei die Kommunikationseinrichtung vorzugsweise unabhängig von der Verarbeitungseinrichtung deaktivierbar ist. Durch das Trennen der externen Bereitstellung abgelegter Informationen von ihrer Generierung bzw. Abspeicherung kann der Energieverbrauch des Überwachungssystems insgesamt weiter verringert sein. Das Überwachungssystem kann dazu eingerichtet sein, entweder Informationen abzutasten oder über die Kommunikationseinrichtung bereitzustellen, ein Mischbetrieb kann ausgeschlossen sein. Die Kommunikationseinrichtung kann dazu eingerichtet sein, einen Datenaustausch mittels eines vorbestimmten Protokolls bereitzustellen, das üblicherweise von einer anderen Komponente an Bord des Schienenfahrzeugs verwendet wird, beispielsweise CANopen.

Das Überwachungssystem kann mindestens zwei Betriebszustände mit unterschiedlichen Energieaufnahmen unterstützen, wobei ein Übergang zwischen den Betriebszuständen in Abhängigkeit eines Signals des Sensors erfolgt. Der Betriebszustand mit der niedrigeren Energieaufnahme kann beispielsweise automatisch verlassen werden, wenn ein bestimmtes Sensorsignal vorliegt. Dann wird ein Betriebszustand mit einer höheren Energieaufnahme eingenommen, der üblicherweise eine höhere Verarbeitungsleistung zugeordnet ist, und das Sensorsignal kann genauer oder häufiger ausgewertet werden. Außerdem können eines oder mehrere zusätzliche Sensorsignale ausgewertet werden. So kann während einer Periode, in der eine Verformung des Dämpfungselements gering ist, Energie eingespart werden, und im Fall einer maßgeblichen Verformung rasch eine genaue Messung durchgeführt werden.

Ein Verfahren zum Überwachen eines Dämpfungselements an einem Schienenfahrzeug, wobei das Dämpfungselement einen am Schienenfahrzeug befestigten ersten Abschnitt und einen zur Einleitung einer horizontal auf das Schienenfahrzeug wirkenden Kraft eingerichteten zweiten Abschnitt umfasst, umfasst Schritte des Erfassens eines Sensorsignals, das auf eine Änderung eines Abstands des ersten vom zweiten Abschnitt hinweist; des Bestimmens von Informationen bezüglich der Änderung des Abstands; und des Ablegens der Informationen in einem Datenspeicher. Dabei wird das Verfahren mittels eines hierin beschriebenen Überwachungssystems ausgeführt.

Ein Computerprogrammprodukt umfasst Programmcodemittel zur Durchführung des beschriebenen Verfahrens, wobei das Computerprogrammprodukt auf einer Verarbeitungseinrichtung ausgeführt wird oder auf einem computerlesbaren Datenträger gespeichert ist.

Die Erfindung wird nun mit Bezug auf die beigefügten Figuren genauer beschrieben, in denen:
Fig. 1 beispielhafte Dämpfungselemente für ein Schienenfahrzeug;
Fig. 2 ein Überwachungssystem für ein Dämpfungselement;
Fig. 3 ein Ablaufdiagramm eines Verfahrens zum Überwachen eines Dämpfungselements; und
Fig. 4 beispielhafte Sensorwerte an einem Dämpfungselement darstellt.

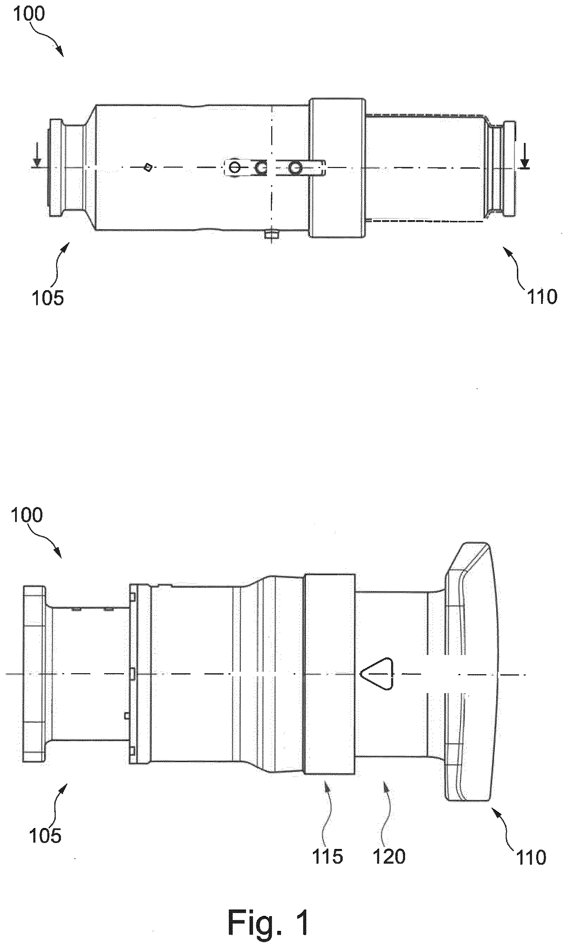

Figur 1 zeigt zwei beispielhafte Dämpfungselemente 100 für ein Schienenfahrzeug wie eine Lokomotive oder einen Eisenbahnwagen. Die Dämpfungselemente 100 sind zur Übermittlung von im Wesentlichen horizontal wirkenden Kräften eingerichtet und umfassen jeweils einen ersten (proximalen) Abschnitt 105 zur Befestigung am Schienenfahrzeug und einen zweiten (distalen) Abschnitt 110 zur Einleitung einer Kraft. Dabei ist üblicherweise zusätzlich zur Dämpfung auch eine elastische Federung zwischen den Abschnitten 105, 110 implementiert.

In der im oberen Bereich von Fig. 1 dargestellten Variante ist das Dämpfungselement 100 als Kupplungsstange zum Einsatz zwischen einer Kupplung, insbesondere einer Scharfenbergkupplung, und einem Schienenfahrzeug bzw. dessen Fahrgestell (Chassis) eingerichtet. Zwischen dem zweiten Abschnitt 110 und dem Schienenfahrzeug kann ein Gelenk vorgesehen sein. Das dargestellte Dämpfungselement 100 ist üblicherweise vorwiegend regenerativ ausgeführt und kann zusätzlich eine insbesondere hydraulische oder auf Reibungskraft basierende Dämpfung realisieren. Die Dämpfung kann aus einer unbelasteten Normalposition in Zug- oder in Schubrichtung oder in beiden Richtungen wirken, auch in unterschiedlicher Stärke. Die Kupplung ist bevorzugt zur Verbindung mit einem anderen Schienenfahrzeug eingerichtet. Über das Dämpfungselement 100 können beispielsweise Kräfte im Bereich von mehreren 100 kN bis über 1000 kN übertragen werden.

In der im unteren Bereich von Fig. 1 dargestellten Variante ist das Dämpfungselement 100 exemplarisch als Puffer oder Seitenpuffer ausgeführt. Der links dargestellte erste Abschnitt 105 ist zur Befestigung am Schienenfahrzeug eingerichtet, während der zweite Abschnitt 110 zur Anlage an einem anderen Puffer oder einem anderen Objekt eingerichtet ist, gegen das das Schienenfahrzeug laufen kann, etwa einen Prellbock. Zwischen dem ersten Abschnitt 105 und dem zweiten Abschnitt 110 kann zur vorwiegend destruktiven Dämpfung eine Anordnung mit Ringfedern vorgesehen sein.

In der dargestellten Ausführungsform liegt zwischen den Abschnitten 105 und 110 ein dritter Abschnitt 115, der mittels eines verformbaren Bereichs 120 mit dem zweiten Abschnitt 110 verbunden ist. Der dritte Abschnitt 115 hat hierbei die Funktion des oben beschriebenen ersten Abschnitts 105. Die Verformung des Bereichs 120 tritt in der dargestellten Ausführungsform bevorzugt erst auf, falls ein vorhandener Dämpfungsweg der ersten Abschnitts 105 gegenüber dem dritten Abschnitt 115 aufgebraucht ist. In einer anderen Ausführungsform umfasst das Dämpfungselement 100 lediglich eine destruktive Dämpfung, die beispielsweise auch als Kasten oder andere Struktur realisiert sein kann. Weitere Kombinationen regenerativer und destruktiver Dämpfungselemente 100, seriell oder parallel, sind ebenfalls möglich. Zur Überwachung eines Dämpfungselements 100 wird vorgeschlagen, ein Überwachungssystem bereitzustellen, das eine Dämpfungsbewegung der Abschnitte 105, 110 möglichst autark und über längere Zeit hinweg abtasten und in einem Datenspeicher abspeichern kann.

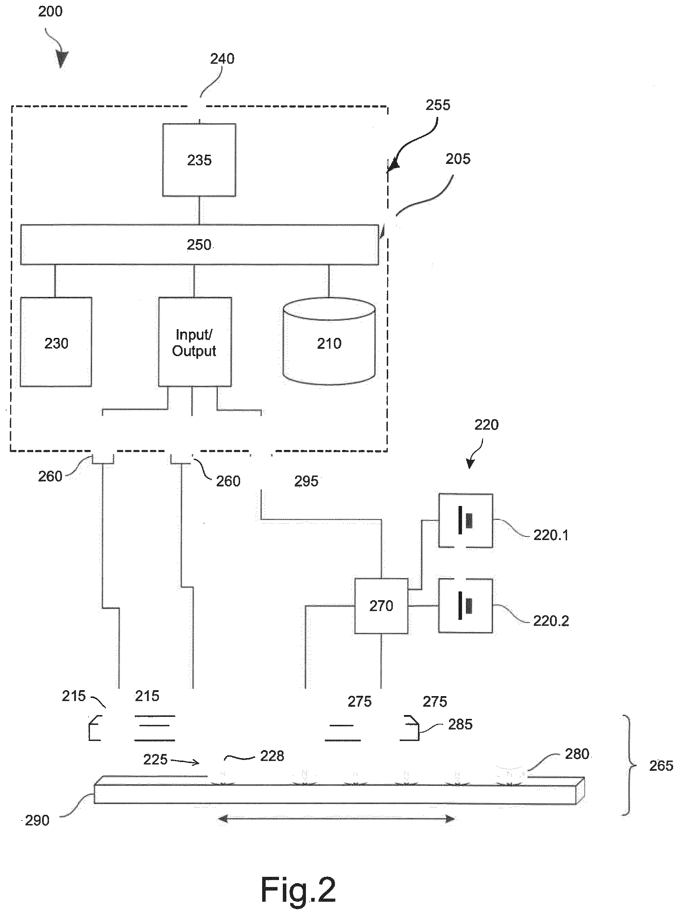

Figur 2 zeigt ein Überwachungssystem 200 für ein Dämpfungselement 100 wie aus Fig. 1. Das Überwachungssystem 200 umfasst eine Verarbeitungseinrichtung 205, die insbesondere als programmierbarer Mikrocomputer ausgeführt sein kann, einen Datenspeicher 210, einen oder mehrere Sensoren 215 sowie eine Energieversorgungseinrichtung, die durch einen Energiespeicher 220 gebildet sein kann.

Der Datenspeicher 210 kann insbesondere einen Halbleiterspeicher umfassen, der bevorzugt die in ihm abgelegten Informationen auch ohne Energieversorgung behält. In einer Ausführungsform sind mehrere kaskadierte Datenspeicher 210 vorgesehen, die sich in Aufbau und Speicherfähigkeit unterscheiden können. So kann ein erster Datenspeicher 210 schnell ansprechbar sein, über eine geringe Kapazität verfügen und seine Daten ohne Energieversorgung verlieren. Ein zweiter Datenspeicher 210 kann weniger schnell ansprechbar sein, über eine große Kapazität verfügen und seine Daten auch ohne Energieversorgung behalten.

Ein Sensor 215 ist dazu eingerichtet, eine Änderung des Abstands eines ersten Abschnitts 105 von einem zweiten Abschnitt 210 zu erfassen. Dazu kann der Abstand explizit bestimmt werden oder es kann lediglich eine Veränderung des Abstands abgetastet werden. Der Sensor 215 ist bevorzugt dazu eingerichtet, im rauen Umfeld des Dämpfungselements 100 dauerhaft funktionssicher eingesetzt zu werden. Dazu kann der Sensor 215 beispielsweise in einem M30-Schraubgehäuse angeordnet sein. In einer Ausführungsform ist der Sensor 215 dazu eingerichtet, ein binäres Signal bereitzustellen, wozu insbesondere ein Schalter umfasst sein kann, der entweder geöffnet oder geschlossen ist.

Der Sensor 215 kann etwa einen Magnetschalter umfassen, der seinen Zustand in Abhängigkeit eines Magnetfelds ändert. Der Sensor 215 kann an einem der Abschnitte 105, 110 und am anderen Abschnitt 105, 110 kann ein magnetisches Element 225 angebracht sein. Das magnetische Element 225 umfasst bevorzugt einen oder mehrere Magnete 228. Eine Ausdehnung des magnetischen Elements 225 entlang der relativen Bewegungsrichtung der Abschnitte 105 und 110 kann auf einen Abstand von Sensoren 215 entlang der gleichen Richtung abgestimmt werden, sodass sich bevorzugt eine vorbestimmte Phasenlage von Signalen der Sensoren 215 ergibt. Es können auch mehr als zwei Sensoren 215 oder mehr als ein magnetisches Element 225 vorgesehen sein. In anderen Ausführungsformen kann der Sensor 215 auch eine andere Größe als ein Magnetfeld abtasten, beispielsweise eine optische Markierung oder eine physische Betätigungseinrichtung für einen Schalter des Sensors 215.

In noch einer anderen Ausführungsform ist der Sensor 215 zur Bereitstellung eines mehr als zweiwertigen digitalen Signals oder eines analogen Signals eingerichtet, das jeweils auf einen Abstand oder eine Abstandsänderung der Abschnitte 105, 110 hinweist.

Optional umfasst das Überwachungssystem 200 ferner einen Zeitgeber 230, der als freilaufender Zähler, Aufnahme- / Vergleichseinheit (CAPCOM: capture / compare) oder Echtzeituhr (RTC: real time clock) ausgeführt sein kann. Der Zeitgeber 230 stellt ein Zeitsignal bereit, mittels dem ein zeitlicher Abstand zwischen Ereignissen, insbesondere Änderungen eines Signals des Sensors 215, festgehalten werden können.

Weiter kann das Überwachungssystem 200 eine Kommunikationseinrichtung 235 umfassen, die dazu eingerichtet ist, Daten über eine Schnittstelle 240 auszutauschen. Die Schnittstelle 240 kann einem vorbestimmten Standard zum Datenaustausch folgen, beispielsweise CANopen, und ist bevorzugt unabhängig von der Verarbeitungseinrichtung 205. Zur Kommunikation der Verarbeitungseinrichtung 205 mit der Kommunikationseinrichtung 235 kann ein Treiberbaustein zur Entkopplung vorgesehen sein. Die Kommunikationseinrichtung 235 kann dazu eingerichtet sein, die Verarbeitungseinrichtung 205 zu einer Übermittlung von Daten aus dem Datenspeicher 210 aufzufordern. Dazu kann die Verarbeitungseinrichtung aus einem Ruhezustand in einen Verarbeitungszustand verbracht werden, beispielsweise mittels einer Unterbrechungsanforderung (Interrupt). Die Kommunikationseinrichtung 235 kann als selbstständiger programmierbarer Mikrocomputer implementiert oder zusammen mit der Verarbeitungseinrichtung 205 von einem Mikrocontroller 255 umfasst sein. Der Mikrocontroller 255 kann ferner den bzw. einen der Datenspeicher 210, den Zeitgeber 230 oder den Treiberbaustein 245 umfassen, wie beispielhaft in Figur 2 wiedergegeben. Ferner können Teile oder alle Bestandteile des Überwachungssystems 200 zu einem System (System on Chip (SoC)) zusammengefasst werden, um eine Optimierung u. a. hinsichtlich Kosten, Platzbedarf und Energieeffizienz zu ermöglichen.

Der Sensor 215 ist bevorzugt über einen als Interrupteingang 260 ausgeführten Anschluss mit der Verarbeitungseinrichtung 205 bzw. dem Mikrocontroller 255 verbunden. Entspricht ein Pegel am Interrupteingang 260 einem vorbestimmten Wert (0 oder 1) oder ändert sich der Pegel in einer vorbestimmten Weise (steigend von 0 nach 1 oder fallend von 1 nach 0), so wird eine Unterbrechungsanforderung an die Verarbeitungseinrichtung 205 gesandt, worauf diese ihre Tätigkeit unterbrechen und die Unterbrechung beantworten kann. So kann die Verarbeitungseinrichtung 205 Informationen über eine Veränderung des Abstands der Abschnitte 105 und 110 ereignisgesteuert vom Sensor 215 abtasten, verarbeiten und im Datenspeicher 210 abspeichern.

Es ist bevorzugt, dass Informationen im Datenspeicher 210 abgelegt werden, die einen Dämpfungsweg des Dämpfungselements 100 unmittelbar oder mittelbar beschreiben, abgelegt werden. Die Informationen sind bevorzugt mit relativen oder absoluten Zeitinformationen versehen. Der nach der Zeit abgeleitete Dämpfungsweg kann auch als Geschwindigkeitsinformation abgelegt werden. Zusätzlich können Systemparameter des Überwachungssystems 100 im Datenspeicher abgelegt werden, um eine nachträgliche Analyse der Funktionsfähigkeit des Überwachungssystems 200 zum Zeitpunkt einer Bewegung des Dämpfungselements 100 zu erlauben.

Die Verarbeitungseinrichtung 205 oder der Mikrocontroller 255 kann unterschiedliche Energiezustände kennen. Ein erster Energiezustand wird Ruhezustand genannt und erfordert nur wenig Energie aus der Energieversorgungseinrichtung, erlaubt aber üblicherweise nur eine langsame oder gar keine Verarbeitung von Informationen. Außerdem kann ein Peripherielement, beispielsweise der Zeitgeber 230, ganz oder teilweise deaktiviert sein. Ein zweiter Energiezustand, der Verarbeitungszustand genannt wird, erfordert üblicherweise eine größere Energieaufnahme, erlaubt dabei eine schnellere Informationsverarbeitung und kann eines oder mehrere Peripherieelemente aktivieren. Ein Übergang vom ersten in den zweiten Energiezustand kann erfolgen, wenn eine Unterbrechung (ein Interrupt) ausgelöst wird, insbesondere weil der Sensor 215 ein entsprechendes Signal am Interrupteingang 260 bereitstellt. Ein Übergang vom zweiten in den ersten Energiezustand kann programmgesteuert erfolgen.

In einer bevorzugten Ausführungsform umfasst die Energieversorgungseinrichtung einen Generator 265, der dazu eingerichtet ist, eine mechanische Relativbewegung der Abschnitte 105, 110 in elektrische Energie umzuwandeln, sodass mit der geernteten Energie das Überwachungssystem 200 zu betrieben werden kann. Bevorzugt arbeitet der Generator 275 induktiv und umfasst wenigstens einen Permanentmagneten 280, der an einem der Abschnitte 105, 110 angebracht ist, und wenigstens eine Spule 275, die am anderen Abschnitt 105, 110 angebracht ist. Ein Umsetzer 270 kann vorgesehen sein, um die durch den Generator 275 bereitgestellte elektrische Energie anzupassen, insbesondere bezüglich einer Spannung, einer Stromstärke, einer Polarität oder einer Welligkeit. Der Umsetzer kann eine Zenerdiode, einen Linearregler oder einen Gleichspannungswandler umfassen und insbesondere dazu eingerichtet sein, elektrische Energie mit einer vorbestimmten Gleichspannung bereitzustellen.

Der Magnet 280 hat eine Längsachse, die sich zwischen einem magnetischen Nordpol und einem magnetischen Südpol erstreckt. Es ist bevorzugt, dass der Magnet 280 derart am zugeordneten Abschnitt 105, 110 angebracht ist, dass seine Längsachse im Wesentlichen senkrecht zur relativen Bewegungsrichtung der Abschnitte 105, 110 ausgerichtet ist. Auch die Spule 275 weist dien Längsachse auf, die sich zwischen ihren magnetischen Polen erstreckt, wenn ein Strom durch die Spule 275 fließt. Die Spule 275 ist bevorzugt so orientiert, dass ihre Längsachse parallel zur Längsachse eines korrespondierenden Magneten 280 verläuft. Dabei sind die Spule 275 und der Magnet 280 einander axial zugewandt, so dass die Längsachsen im Wesentlichen miteinander fluchten, wenn die Abschnitte 105, 110 derart ausgelenkt sind, dass ein Abstand zwischen der Spule 275 und dem Magneten 280 minimal ist.

Bevorzugt sind mehrere Spulen 275 und/oder mehrere Magnete 280 vorgesehen, um einen größeren Weg der Elemente 105, 110 zur Energiegewinnung auszunutzen. Durch den Einsatz mehrerer Spulen 275 kann die durch den Generator 265 bereitgestellte Energie bei einer vorbestimmten Relativbewegung der Abschnitte 105, 110 vergrößert sein. Werden sowohl mehrere Spulen 275 als auch mehrere Magnete 280 verwendet, so können die Spulen 275 entlang einer zur relativen Bewegungsrichtung der Abschnitte 105, 110 parallelen ersten Geraden und die Magnete 280 entlang einer dazu parallelen zweiten Geraden angeordnet sein. In einer Ausführungsform sind jeweils zueinander benachbarte Magneten 280 bezüglich ihrer magnetischen Pole gleich orientiert. In einer anderen Ausführungsform sind die Magneten 280 magnetisch abwechselnd orientiert, sodass eine an den Magneten 280 vorbei streichende Spule 275 abwechselnd einem Nordpol und einem Südpol zugewandt ist. Zwischen benachbarten Magneten 280 kann mittels eines magnetischen Leitelements ein magnetischer Fluss hergestellt sein. Ein solches Leitelement, beispielsweise in Form eines Leitblechs oder eines Pakets von Leitblechen, kann insbesondere im Bereich der magnetischen Pole, die den Spulen 275 abgewandt sind, an den Magneten 280 angeordnet sein. Zwischen benachbarten Spulen 275 kann ein korrespondierendes magnetisches Leitelement vorgesehen sein.

Es ist bevorzugt, dass die Spulen 275 in Bewegungsrichtung der Abschnitte 105, 110 andere relative Abstände als die Magneten 280 haben, sodass bei einer Relativbewegung unterschiedliche Spulen 275 nacheinander einen jeweils kleinsten Abstand zu einem Magneten 280 haben. In einer Ausführungsform sind auf einer Strecke mit N gleichmäßig beabstandeten Spulen 275 N+1 oder N-1 gleichmäßig beabstandete Magneten 280 angeordnet. Weitere Magneten mit gleichen Abständen können außerhalb der Strecke angeordnet sein. Durch die Versetzung kann die bereitgestellte elektrische Energie gleichmäßiger über den Weg oder die Zeit verteilt sein.

Die durch den Generator 265 bereitgestellte elektrische Energie ist unter Anderem von der relativen Bewegungsgeschwindigkeit des Magneten 280 gegenüber der Spule 280 und damit von der relativen Bewegungsgeschwindigkeit der Abschnitte 105, 110 abhängig. Je schneller diese Bewegung erfolgt, desto größer ist die an der Spule 275 induzierte Spannung. Der Umsetzer 270 ist bevorzugt dazu eingerichtet, die induzierte Spannung gleich zu richten, beispielsweise mittels eines Brückengleichrichters, und auf ein vorbestimmtes Maß zu begrenzen oder anzuheben, das für den Betrieb des Überwachungssystems 200 nutzbar ist. Die Höhe der verwendbaren Spannung ist üblicherweise durch einen verwendeten Halbleiter bestimmt und kann ca. 12V, ca. 5V, ca. 3V oder ca. 1,3V betragen. Bevorzugt ist der Umsetzer 270 auch dazu eingerichtet, durch den Generator 265 bereitgestellte elektrische Energie im Energiespeicher 220 zwischen zu speichern. Dazu kann der Generator 265 einen Ladestrom des Energiespeichers 220 steuern, insbesondere falls es sich um einen chemischen Energiespeicher wie einen Li-lon oder NiMh-Akkumulator handelt. Auch eine Abgabe von elektrischer Energie aus dem Energiespeicher 220 kann mittels des Umsetzers 270 gesteuert werden. In einer weiteren Ausführungsform sind für das Laden und das Bereitstellen von Energie aus dem Energiespeicher 220 getrennte Umsetzer 270 vorgesehen.

In noch einer weiteren Ausführungsform sind ein erster, aufladbarer Energiespeicher 220.1, der mittels des Generators 265 aufgeladen werden kann, und ein zweiter, nicht aufladbarer Energiespeicher 220.2 vorgesehen, der beispielsweise chemisch als Quecksilberbatterie, Zink-Kohle-Batterie oder Alkali-Manganbatterie aufgebaut ist. Der erste Energiespeicher 220 kann insbesondere einen Akkumulator oder einen Kondensator, insbesondere einen Doppelschichtkondensator, einen Superkondensator oder einen Ultrakondensator umfassen. Der Umsetzer 270 kann die Bereitstellung und Entnahme von Energie derart steuern, dass elektrische Energie bevorzugt unmittelbar dem Generator 265 entnommen wird. Reicht die Energie des Generators 265 nicht aus, kann zusätzlich oder alternativ Energie aus dem ersten Energiespeicher 220.1 entnommen werden. Erst wenn auch diese Energie nicht ausreicht, kann weitere Energie aus dem zweiten Energiespeicher 220.2 entnommen werden. Dadurch kann beispielsweise das Überwachungssystem 200 auch dann noch betrieben werden, wenn der Generator 265 nicht arbeitet und der erste Energiespeicher 220.1 erschöpft ist. Dazu kann es kommen, weil sich das Dämpfungselement 100, an dem das Überwachungssystem 200 angebracht ist, am vordersten oder hintersten Ende eines Schienenfahrzeugs befindet oder das Schienenfahrzeug abgestellt ist.

Der Generator 265 kann unabhängig vom restlichen Überwachungssystem 200 aufgebaut und optional entfernt von ihm angeordnet sein. In einer anderen Ausführungsform ist der Generator 265 vom Überwachungssystem 200 umfasst und kann auch mit diesem integriert aufgebaut sein. Wenigstens einer der Energiespeicher 220 kann dem Generator 265 zugeordnet sein und ist bevorzugt räumlich nahe beim Generator 265 angeordnet. Einer der Energiespeicher 220 kann auch dem Überwachungssystem zugeordnet und räumlich nahe bei diesem angebracht sein. In einer Ausführungsform ist der Generator 265, optional zusammen mit dem Umsetzer 270, dem ersten Energiespeicher 220.1 oder dem zweiten Energiespeicher 220.2, dazu eingerichtet, elektrische Energie an ein weiteres elektrisches System bereitzustellen. Zum Anschluss elektrischer Verbraucher kann eine Schnittstelle 295 vorgesehen sein.

Sowohl die Sensoren 215 als auch die Spulen 275 werden bevorzugt von einem permanentmagnetischen Element 228, 280 beeinflusst. In einer Ausführungsform können der- oder dieselben Magneten 280 dazu eingerichtet sein, an den Spulen 275 und an den Sensoren 215 vorbei zu streichen, wenn sich die Elemente 105 und 110 relativ zueinander bewegen. Das oben beschriebene magnetische Element 225 kann dabei einen oder mehrere der Magneten 280 umfassen. Bevorzugt ist der Magnet 280 derart am Element 105, 110 angebracht, dass er sich ohne Kompressionsbelastung des Dämpfungselements 100 im Bereich der Spulen 275, aber noch nicht im Bereich der Sensoren 215 befindet. Bereits bei einer kleineren relativen Auslenkung der Elemente 105, 110 kann in der Spule 275 ein elektrischer Strom induziert werden, ohne dass der Sensor 215 seinen Schaltzustand ändert. Erst wenn die Auslenkung der Elemente 105, 110 ein vorbestimmtes Maß übersteigt, kann der Magnet 280 in den Bereich des Sensors 215 gelangen, sodass er sein Ausgangssignal ändert. Bevorzugt liegt in dieser Stellung bereits ein weiterer Magnet 280 im Bereich einer Spulen 275, sodass die Generierung von elektrischer Energie aufrecht erhalten werden kann.

Einer oder mehrere Sensoren 215 und/oder einer oder mehrere Spulen 275 können an einem ersten Trägerelement 285 angebracht sein, das an einem der Elemente 105, 110 befestigt werden kann. In entsprechender Weise können einer oder mehrere Magneten 280 an einem zweiten Trägerelement 290 angebracht sein, das am anderen Element 105, 110 befestigt werden kann. Die relative Anordnung der Spulen 275 oder Magneten 280 kann so bereits vor ihrer Anbringung am Dämpfungselement 100 festgelegt werden. Eine Wartung oder ein Austauschen der Magneten 280 oder Spulen 275 können vereinfacht sein. Weitere Teile des Überwachungssystems 200 können an einem der Träger 285, 290 angebracht sein. So kann das gesamte Überwachungssystem 200 als eine oder zwei separat handhabbare Einheiten realisiert sein. In einer Ausführungsform umfassen die Abschnitte 105, 110 konzentrisch ineinander gestreckte Rohrabschnitte und das Überwachungssystem 200 kann innerhalb eines der Rohrabschnitte angeordnet sein. Durch die lokale, autarke Energieversorgung und gegebenenfalls in Verbindung mit dem Datenspeicher 210 oder einer drahtlosen Schnittstelle 240 kann das Überwachungssystem im hermetisch verschlossenen Dämpfungselement angebracht sein.

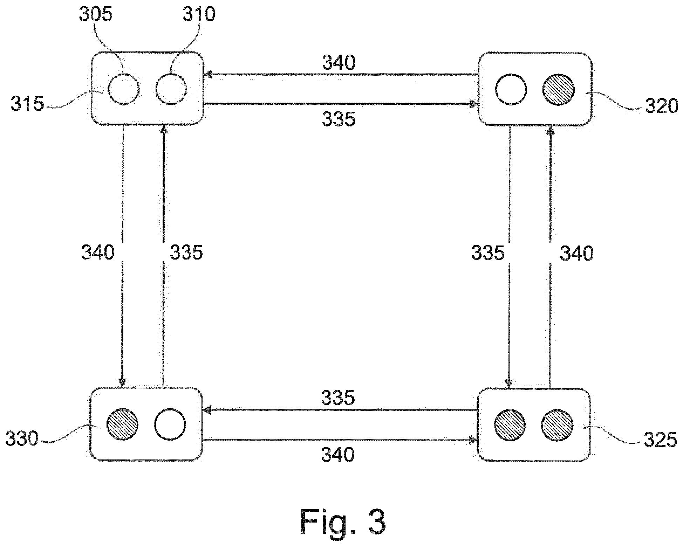

Figur 3 zeigt ein Ablaufdiagramm eines Verfahrens 300zum Überwachen eines Dämpfungselements 100 wie den in Fig. 1 dargestellten. Verfahrensschritte sind dabei als Übergänge zwischen Zuständen 315, 320, 325 und 330 dargestellt. Es wird von einer Anordnung von zwei Sensoren 215 nach Art von Fig. 2 ausgegangen. In jedem Zustand sind das Ausgangssignal 305 eines ersten Sensors 215 und das Ausgangssignal 310 eines zweiten Sensors 215 dargestellt. Je nachdem, ob überhaupt ein Signal erfasst wird oder aber die einzelnen Signalzustände nur durch unterschiedliche Pegel charakterisiert sind, verdeutlicht ein heller Kreis das nicht erfasste Signal bzw. das Signal mit einem niedrigen Pegel und ein dunkler Kreis das erfasste Signal bzw. das Signal mit hohem Pegel symbolisiert.

Zunächst befinde sich das Verfahren 300 zum Beispiel im ersten Zustand 315, in welchem beide Ausgangssignale 305, 310 entweder als nicht erfasste Signale oder Signale mit niedrigem Pegel vorliegen. Liegt jedoch ein Signal an oder ändert das erste Ausgangssignal 305 seinen Pegel, so geht das Verfahren 300 in den Zustand 330 über. Dies entspricht einem ersten Zustandsübergang in Form des Übergangsschrittes 335 entgegen dem Uhrzeigersinn, der beispielsweise auf eine Kompression des Dämpfungselements 100 hinweisen kann. Eine weitere Kompression ändert die Ausgangssignale 305, 310 derart, dass weitere Zustandsübergänge in Übergangsschritten erfolgen und dadurch die Zustände 325 und 320 durchlaufen werden.

Mit jedem Zustandsübergang charakterisierenden Übergangsschritt 335, 340 können Informationen über die Bewegung des Dämpfungselements 100 bestimmt und im Datenspeicher 210 abgelegt werden. Bevorzugt wird dazu mindestens bestimmt, wie groß die Bewegung der Abschnitte 105, 110 ist. Bevorzugt wird auch anhand der Reihenfolge des Durchlaufens der Zustände 315 - 330 eine Bewegungsrichtung der Abschnitte 105, 110 bestimmt und im Datenspeicher 210 abgelegt. Auf der Basis der Länge der bestimmten Bewegung kann mithilfe einer wirkenden einer Federkraft des Dämpfungselements 100 auch die Betätigungskraft oder die Betätigungsenergie bestimmt und abgelegt werden. Zur deren Bestimmung kann auch eine Dämpfung des Dämpfungselements 100 berücksichtigt werden, wozu eine Bewegungsgeschwindigkeit der Abschnitte 105, 110 berücksichtigt werden kann.

Die Bewegungsgeschwindigkeit kann auf der Basis von Zeitdauern zwischen dem Erreichen von Zuständen 315 - 330 und der Geometrie der Anordnung von Sensoren 215 und des Elements 225 am Dämpfungselement 100 bestimmt werden. Beträgt der Abstand der Sensoren 215 beispielsweise 30 mm entlang der Bewegungsrichtung und liegt zwischen dem Erreichen des Zustands 320 und dem Erreichen des Zustands 325 eine Zeit von 0,5 s, so beträgt die Kompressionsgeschwindigkeit des Dämpfungselements 100 in diesem Bereich 60 mm/s. Bewegungsgeschwindigkeiten zwischen den anderen Übergängen können in entsprechender Weise bestimmt werden.

In einer Ausführungsform werden unmittelbar gemessene Informationen abgelegt, sodass eine weitere Verarbeitung der Informationen zu einem späteren Zeitpunkt insbesondere nach einem Auslesen der Informationen mittels der Kommunikationseinrichtung 235 erfolgen kann. Zur weiteren Verarbeitung können durch die Bauart der Dämpfungseinrichtung 100 festgelegt Werte oder Konstanten für die abgelegten Informationen summatorisch abgelegt werden. Solche Informationen können beispielsweise eine geometrische Abmessung, Maße oder Abstände der Anordnung von Sensoren 215 und des Elements 225, eine Federkonstante oder eine Dämpfungskonstante zählen. In einer Variante kann auch ein Hinweis auf derartige Parameter angegeben sein, indem beispielsweise ein Typ, eine Baunummer oder eine Ausführungsform der Dämpfungseinrichtung 100 im Datenspeicher 210 abgelegt wird.

In der dargestellten Ausführungsform kann ein Übergang vom vierten Zustand 320 in den ersten Zustand 315 erfolgen, sodass der erste Zustand zwei unterschiedlichen Abständen der Abschnitte 105, 110 zugeordnet ist. Der korrekte Abstand ergibt sich dann aus dem Zustand 315 - 330 und bereits erfolgten 335, 340. Zur Vermeidung einer Desynchronisation ist in diesem Fall bevorzugt, dass die Verarbeitungseinrichtung die Sensoren 215 häufig genug regelmäßig abfragt und die Sensoren 215 über eine ausreichend kurze Reaktionszeit verfügen.

Vorzugsweise wird ein Abgleich zwischen dem Zustand 315 - 340 und dem tatsächlichen Abstand möglichst periodisch durchgeführt. Sind noch weitere Elemente 225 vorgesehen, die entlang der Bewegungsrichtung angebracht und geeignet voneinander beabstandet sind, so können noch weitere Zustände 315 - 340 mehrfach durchlaufen werden, prinzipiell beliebig oft. Um die dabei bestimmten Informationen korrekt zu verarbeiten, können in einer anderen Ausführungsform auch entsprechend mehr Zustände 315 - 330 vorgesehen sein, sodass jedem Zustand 315 - 330 nur ein einziger Abstand zugeordnet ist.

Eine Expansionsbewegung des Dämpfungselements 100 in der umgekehrten Richtung kann anhand der Reihenfolge des Durchlaufens der dargestellten Zustände 315 bis 330 in zweiten Zustandsübergängen 340 im Uhrzeigersinn detektiert werden.

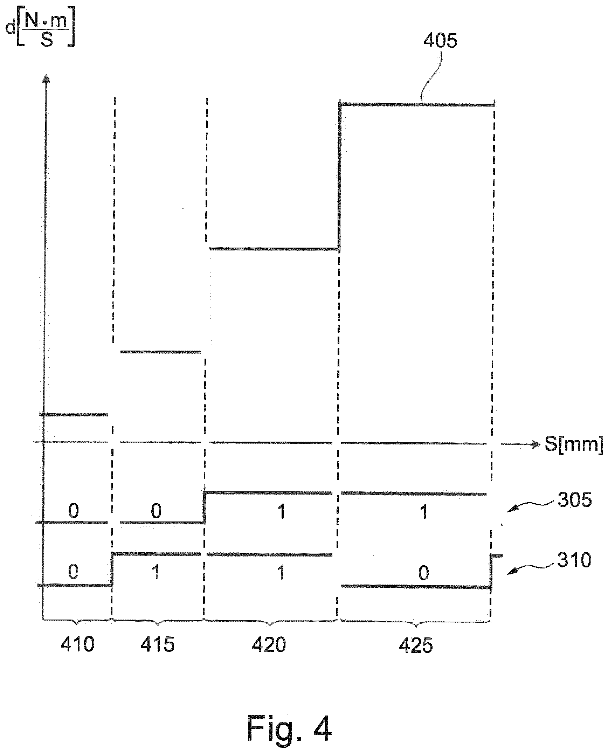

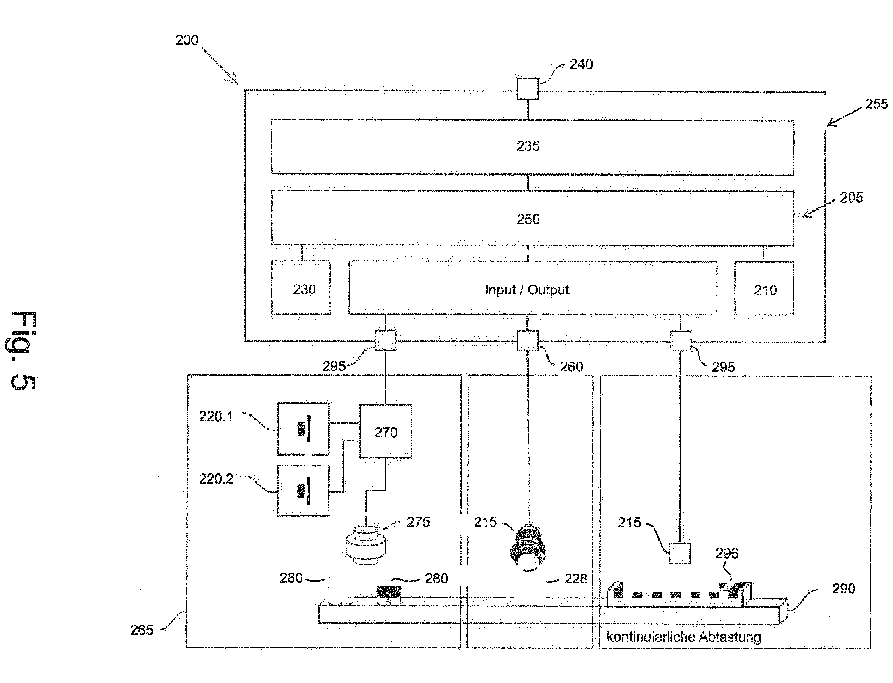

Figur 4 zeigt beispielhafte Sensorwerte an einem Dämpfungselement 100 wie denen von Figur 1. In vertikaler Richtung ist eine exemplarische Dämpfungskonstante d und in horizontaler Richtung ein Abstand des ersten Abschnitts 105 vom zweiten Abschnitt 110 dargestellt. Nach rechts steigt der Abstand zwischen den Abschnitten 105 und 110 an, wenn eine Zugkraft auf das Dämpfungselement 100 betrachtet wird, oder fällt ab, wenn eine Schubkraft betrachtet wird. Ein exemplarischer Verlauf 405 stellt eine Abhängigkeit der Dämpfung von einem Abstand an einem Dämpfungselement 100 dar.

Entlang des Abstands sind vier Äquivalenzbereiche 410, 415, 420 und 425 gebildet, die aneinander angrenzen. Die Dämpfungskonstante d ist innerhalb jedes Äquivalenzabschnitts 410-425 konstant. Der Darstellung sind zwei Sensoren 215 zugrunde gelegt, die die Ausgangssignale 305 bzw. 310 von Fig. 3 bereitstellen. Dabei sind die Sensoren 215 nach der in Fig. 2 dargestellten Art angeordnet, sodass das Element 225 im ersten Äquivalenzbereich 410 auf keinen der Sensoren 215, im zweiten 415 nur auf den ersten Sensor 215, im dritten 420 auf beide Sensoren 215 und im vierten 425 nur auf den zweiten Sensor 215 wirkt. Die Sensoren 215 und das Element 225 sind bevorzugt derart an den Abschnitten 105, 110 positioniert, dass eine Änderung eines Ausgangssignals eines Sensors 215 immer dort erfolgt, wo der Abstand von einem Äquivalenzbereich 405-420 in einen anderen übergeht.

Anhand der Kombination der Ausgangssignale 305, 310 der Sensoren 215 kann der vorliegende Äquivalenzbereich 410-425 bestimmt werden. Die Energie, die zur Bewegung des Dämpfungselements 100 geführt hat, kann auf der Basis der Geschwindigkeit der Bewegung und den Dämpfungskonstanten in den Äquivalenzbereichen wenigstens näherungsweise bestimmt werden. Für die Bestimmung kann auch eine Federkraft des Dämpfungselements 100 verwendet werden.

Wie oben beschrieben ist, kann das Überwachungssystem 200 verschiedene Betriebszustände einnehmen, denen unterschiedliche Energieaufnahmen und zugeordnet sind. Beispielsweise kann ein erster Betriebszustand einen Ruhezustand umfassen, in welchem die Energieaufnahme gering ist und nur eine geringe Verarbeitungsgeschwindigkeit erzielt werden kann, und ein zweiter Betriebszustand einen Verarbeitungszustand, in welchem die Energieaufnahme größer ist, und eine Verarbeitungsgeschwindigkeit ebenfalls. Es können auch mehr als zwei Betriebszustände unterstützt sein. Jedem Betriebszustand kann eine Zeit zugeordnet sein, die das Überwachungssystem benötigt, um diesen Zustand wieder zu verlassen. Außerdem kann jedem Betriebszustand eine Bedingung oder eine Kombination von Bedingungen zugeordnet sein, die erfüllt sein muss, um den Betriebszustand wieder zu verlassen. Derartige Zeiten können bei einem aktuellen Mikroprozessor im µs- oder ms-Bereich liegen.

Das Überwachungssystem 200 kann dazu eingerichtet sein, den Ruhezustand einzunehmen, falls über eine vorbestimmte Zeit hinweg kein Zustandsübergang bzw. Übergangsschritt 335, 340 erfolgt. Die Änderung des Zustands 315 - 330 über einen der Schritte 335, 340 kann eine Unterbrechung (Interrupt) auslösen, die das Überwachungssystem 200 aus dem Ruhezustand in den Verarbeitungszustand bringt. Der Interrupt kann durch eine steigende oder fallende Flanke oder durch einen vorbestimmten Pegel eines der Ausgangssignale 305, 310 ausgelöst werden. In einer weiteren Ausführungsform kann das Überwachungssystem 200 auch die Ausgangssignale 305, 310 periodisch abfragen und verarbeiten, um eine Änderung zu bestimmen. Einen solchen Betrieb nennt man auch "polling". Dazu kann das Überwachungssystem 200 beispielsweise zeitgesteuert den Ruhezustand verlassen und die Abfrage im Verarbeitungszustand durchführen. Eventuell ist auch eine (langsame) Abfrage im Ruhezustand möglich.

Im Verarbeitungszustand kann das Überwachungssystem 200 dann die eigentliche Messung durchführen, um eine Kompression, eine Dämpfung, eine Verformung oder einen sonstigen Betriebsparameter des Dämpfungselements 100 zu bestimmen. Erfolgt über eine vorbestimmte Zeit hinweg keine Änderung des Messergebnisses, ändern sich die der Ausgangssignale 305, 310 über eine vorbestimmte Zeit nicht, oder nehmen die Ausgangssignale 305, 310 über eine vorbestimmte Zeit ein vorbestimmtes Muster ein, so kann das Überwachungssystem 200 wieder in den Ruhezustand wechseln, um Energie zu sparen. Das Muster kann insbesondere in einer vorgebestimmten Ruhestellung des Dämpfungselements 100 vorliegen, etwa bei einer Kompression oder Verformung, die unterhalb eines vorbestimmten Schwellenwerts liegt.

In einer weiteren Ausführungsform ist ein vorbestimmtes Muster der Ausgangssignale 305, 310 vorbestimmt, das einen Übergang des Überwachungssystems 200 vom Ruhezustand in den Verarbeitungszustand bewirkt. Dazu kann der Zustand der Ausgangssignale 305, 310 beispielsweise mittels eines Komparators oder fest verdrahteter Logik überwacht werden. Der Komparator kann durch den Mikroprozessor 255 mit einem vorbestimmten Vergleichswert geladen werden und arbeitet bevorzugt digital. So kann das "Aufwecken" des Überwachungssystems 200 daran gekoppelt werden, dass ein vorbestimmter Wegpunkt am Dämpfungselement 100 erreicht wird. Der Wegpunkt kann einer vorbestimmten Verformung des Dämpfungselements 100 entsprechen.

Das Aufwecken kann auch erfolgen, falls mindestens der vorbestimmte Wegpunkt erreicht ist. Dazu kann der oben erwähnte Komparator einen Vergleich auf "größer oder gleich" zwischen dem durch die Ausgangssignale 305, 310 repräsentierten Weg des Dämpfungselements und dem vorbestimmten Wert durchführen. Der vorbestimmte Wert ist in diesem Fall ein Schwellenwert, dessen erreichen oder überschreiten das Aktivieren des Überwachungssystems bewirken kann.

### Bezugszeichen

- 100: Dämpfungselement
- 105: erster Abschnitt
- 110: zweiter Abschnitt
- 115: dritter Abschnitt
- 120: verformbarer Bereich

- 200: Überwachungssystem
- 205: Verarbeitungseinrichtung
- 210: Datenspeicher
- 215: Sensor
- 220: Energiespeicher
- 225: magnetisches Element
- 228: Magnet
- 230: Zeitgeber
- 235: Kommunikationseinrichtung
- 240: Schnittstelle
- 245: Treiberbaustein
- 250: Mikrocontroller
- 255: Mikrocomputer
- 260: Interrupteingang
- 265: Generator
- 270: Umsetzer
- 275: Spule
- 280: Magnet
- 285: erstes Trägerelement
- 290: zweites Trägerelement
- 295: Schnittstelle

- 305: erstes Ausgangssignal
- 310: zweites Ausgangssignal
- 315: erster Zustand
- 320: zweiter Zustand
- 325: dritter Zustand
- 330: vierter Zustand
- 335: erster Übergang
- 340: zweiter Übergang

- 405: erster Äquivalenzbereich
- 410: zweiter Äquivalenzbereich
- 415: dritter Äquivalenzbereich
- 420: vierter Äquivalenzbereich

## Patentansprüche

1. Überwachungssystem (200) für ein Dämpfungselement (100) an einem Schienenfahrzeug, wobei das Dämpfungselement (100) einen am Schienenfahrzeug befestigten ersten Abschnitt (105) und einen zur Einleitung einer horizontal auf das Schienenfahrzeug wirkenden Kraft eingerichteten zweiten Abschnitt (110) umfasst, und das Überwachungssystem (200) folgendes umfasst:
- einen am Dämpfungselement (100) angebrachten Sensor (215) zur Abtastung einer Änderung eines Abstands (s) des ersten (105) vom zweiten Abschnitt (110);
- einen Datenspeicher (210); und
- eine Verarbeitungseinrichtung (205), die dazu eingerichtet ist, Informationen bezüglich der Änderung des Abstands (s) zu bestimmen und im Datenspeicher (210) abzulegen,
- **gekennzeichnet durch**
- eine lokale Energieversorgungseinrichtung (220, 265) zur autarken Versorgung der Verarbeitungseinrichtung (205), umfassend einen Generator (265) zur Bereitstellung elektrischer Energie auf der Basis einer Relativbewegung der Abschnitte (105, 110), wobei der Generator (265) zur induktiven Umwandlung mechanischer in elektrische Energie eingerichtet ist und eine Spule (275) umfasst, die zur Anbringung am ersten Abschnitt (105) eingerichtet ist, und einen Magneten (280), der zur Anbringung am zweiten Abschnitt (110) eingerichtet ist,
- und wobei der Sensor (215) zur Bestimmung eines Magnetfelds und zur Anbringung am ersten Abschnitt (105) eingerichtet ist, ferner umfassend einen Magneten (280), der zur Anbringung am zweiten Abschnitt (110) eingerichtet ist,
- wobei derselbe Magnet (280) zur Beeinflussung des Sensors (215) und der Spule (275) vorgesehen ist.

2. Überwachungssystem (200) nach Anspruch 1, ferner umfassend ein erstes Trägerelement (285), an dem wenigstens eine Spule (275) und wenigstens ein Sensor (215) angebracht sind, wobei das erste Trägerelement (285) zur Anbringung an einem der Abschnitte (105, 110) eingerichtet ist.

3. Überwachungssystem (200) nach einem der Ansprüche 1 oder 2, wobei der wenigstens eine Magnet (280) an einem zweiten Trägerelement (290) angebracht ist, wobei das zweite Trägerelement (290) zur Anbringung an einem der Abschnitte (105, 110) eingerichtet ist.

4. Überwachungssystem (200) nach einem der vorangehenden Ansprüche, wobei mehrere Magneten (280) und mehrere Spulen (275) vorgesehen sind und relative Abstände zwischen den Magneten (280) ungleich relativen Abständen der Spulen (275), jeweils in Bewegungsrichtung der Abschnitte (105, 110), sind.

5. Überwachungssystem (200) nach einem der vorangehenden Ansprüche, ferner umfassend einen Energiespeicher (220), der dazu eingerichtet ist, mittels des Generators (265) bereitgestellte Energie vorübergehend zu speichern.

6. Überwachungssystem (200) nach einem der vorangehenden Ansprüche, ferner umfassend einen Umsetzer (270), der dazu eingerichtet ist, die mittels des Generators (265) bereitgestellte elektrische Energie aufzubereiten.

7. Überwachungssystem (200) nach einem der vorangehenden Ansprüche, wobei das Dämpfungselement (100) dazu eingerichtet ist, eine den Abstand (s) der Abschnitte (105, 110) ändernde Energie auf vorbestimmte Weise abzubauen.

8. Überwachungssystem (200) nach einem der vorangehenden Ansprüche, wobei der Sensor (215) dazu eingerichtet ist, ein Signal (305, 310), insbesondere binäres Signal bereitzustellen, das sich ändert, wenn sich der Abstand (s) zwischen dem ersten (105) und dem zweiten Abschnitt (110) verändert.

9. Überwachungssystem (200) nach einem der vorangehenden Ansprüche, wobei die Verarbeitungseinrichtung (205) einen Interrupteingang (260) aufweist, an den das binäre Signal (305, 310) geführt ist, und wobei die Verarbeitungseinrichtung (205) dazu eingerichtet ist, aufgrund eines Interrupt von einem Ruhezustand in einen Verarbeitungszustand versetzt zu werden, um die Informationen zu verarbeiten.

10. Überwachungssystem (200) nach einem der vorangehenden Ansprüche, wobei eine Dämpfungskonstante (d) des Dämpfungselements (100) auf Abschnitten (410-425) des Abstands (s) unterschiedlich ist und der Sensor (215) dazu eingerichtet ist, ein Überschreiten eines Abstandsabschnitts (410-425) abzutasten.

11. Überwachungssystem (200) nach einem der Ansprüche 12 bis 14, wobei zwei binäre Sensoren (215) vorgesehen sind, deren abstandsabhängigen Signale phasenverschoben sind und wobei die Verarbeitungseinrichtung (205) dazu eingerichtet ist, auf der Basis der Signale der Sensoren (215) eine Bewegungsrichtung der Abschnitte (105, 110) zu bestimmen.

12. Überwachungssystem (200) nach einem der vorangehenden Ansprüche, ferner umfassend einen Zeitgeber (230), wobei die Verarbeitungseinrichtung (205) dazu eingerichtet ist, Informationen bezüglich einer Geschwindigkeit oder eines Zeitpunkts der Änderung des Abstands (s) zu bestimmen und im Datenspeicher (210) abzulegen.

13. Überwachungssystem (200) nach einem der vorangehenden Ansprüche, ferner umfassend eine Kommunikationseinrichtung (235) zur Bereitstellung von im Datenspeicher (210) abgelegten Informationen an einer Schnittstelle (240), wobei die Kommunikationseinrichtung (235) unabhängig von der Verarbeitungseinrichtung (205) deaktivierbar ist.

14. Überwachungssystem (200) nach einem der vorangehenden Ansprüche, wobei mindestens zwei Betriebszustände mit unterschiedlichen Energieaufnahmen unterstützt werden und ein Übergang zwischen den Betriebszuständen in Abhängigkeit eines Signals des Sensors (215) erfolgt.

15. Verfahren (300) zum Überwachen eines Dämpfungselements (100) an einem Schienenfahrzeug, wobei das Dämpfungselement (100) einen am Schienenfahrzeug befestigten ersten Abschnitt (105) und einen zur Einleitung einer horizontal auf das Schienenfahrzeug wirkenden Kraft eingerichteten zweiten Abschnitt (110) umfasst, das Verfahren (300) mittels eines Überwachungssystems (200) nach einem der vorangehenden Ansprüche ausgeführt wird, und folgende Schritte umfasst:
- Erfassen (335, 340) eines Sensorsignals (215), das auf eine Änderung eines Abstands (s) des ersten (105) vom zweiten Abschnitt (110) hinweist;
- Bestimmen (335, 340) von Informationen bezüglich der Änderung des Abstands (s); und
- Ablegen (335, 340) der Informationen in einem Datenspeicher (210).

16. Computerprogrammprodukt mit Programmcodemitteln, die bewirken, dass das Überwachungssystem nach einem der Ansprüche 1 - 14, die Verfahrensschritte nach Anspruch 15 ausführt.

## Claims

1. Monitoring system (200) for a damping element (100) on a rail vehicle, wherein the damping element (100) comprises a first section (105) fastened to the rail vehicle and a second section (110) configured to introduce a force acting horizontally on the rail vehicle, and the monitoring system (200) comprises the following:
- a sensor (215) which is fitted to the damping element (100) and is intended to sense a change in a distance (s) between the first section (105) and the second section (110);
- a data memory (210); and
- a processing device (205) which is configured to determine information relating to the change in the distance (s) and to store said information in the data memory (210),
- **characterized by**
- a local energy supply device (220, 265) for autonomously supplying the processing device (205), comprising a generator (265) for providing electrical energy on the basis of a relative movement of the sections (105, 110), wherein the generator (265) is configured to inductively convert mechanical energy into electrical energy and comprises a coil (275), which is configured to be fitted to the first section (105), and a magnet (280) which is configured to be fitted to the second section (110),
- and wherein the sensor (215) is configured to determine a magnetic field and to be fitted to the first section (105), also comprising a magnet (280) which is configured to be fitted to the second section (110),
- wherein the same magnet (280) is provided for influencing the sensor (215) and the coil (275).

2. Monitoring system (200) according to Claim 1, also comprising a first carrier element (285), to which at least one coil (275) and at least one sensor (215) are fitted, wherein the first carrier element (285) is configured to be fitted to one of the sections (105, 110).

3. Monitoring system (200) according to either of Claims 1 and 2, wherein the at least one magnet (280) is fitted to a second carrier element (290), wherein the second carrier element (290) is configured to be fitted to one of the sections (105, 110).

4. Monitoring system (200) according to one of the preceding claims, wherein a plurality of magnets (280) and a plurality of coils (275) are provided, and relative distances between the magnets (280) are not equal to relative distances between the coils (275), in each case in the direction of movement of the sections (105, 110).

5. Monitoring system (200) according to one of the preceding claims, also comprising an energy store (220) which is configured to temporarily store energy provided by means of the generator (265).

6. Monitoring system (200) according to one of the preceding claims, also comprising a converter (270) which is configured to preprocess the electrical energy provided by means of the generator (265).

7. Monitoring system (200) according to one of the preceding claims, wherein the damping element (100) is configured to reduce energy changing the distance (s) between the sections (105, 110) in a predetermined manner.

8. Monitoring system (200) according to one of the preceding claims, wherein the sensor (215) is configured to provide a signal (305, 310), in particular a binary signal, which changes when the distance (s) between the first section (105) and the second section (110) changes.

9. Monitoring system (200) according to one of the preceding claims, wherein the processing device (205) has an interrupt input (260), to which the binary signal (305, 310) is guided, and wherein the processing device (205) is configured to be changed from a quiescent state to a processing state on account of an interrupt in order to process the information.

10. Monitoring system (200) according to one of the preceding claims, wherein a damping constant (d) of the damping element (100) is different in sections (410-425) of the distance (s), and the sensor (215) is configured to sense when a distance section (410-425) is crossed.

11. Monitoring system (200) according to one of Claims 12 to 14, wherein two binary sensors (215) are provided, the distance-dependent signals from which are phase-shifted, and wherein the processing device (205) is configured to determine a direction of movement of the sections (105, 110) on the basis of the signals from the sensors (215).

12. Monitoring system (200) according to one of the preceding claims, also comprising a timer (230), wherein the processing device (205) is configured to determine information relating to a speed or a time of the change in the distance (s) and to store said information in the data memory (210).

13. Monitoring system (200) according to one of the preceding claims, also comprising a communication device (235) for providing information stored in the data memory (210) at an interface (240), wherein the communication device (235) can be deactivated independently of the processing device (205).

14. Monitoring system (200) according to one of the preceding claims, wherein at least two operating states with different energy consumptions are supported and a transition between the operating states takes place on the basis of a signal from the sensor (215).

15. Method (300) for monitoring a damping element (100) on a rail vehicle, wherein the damping element (100) comprises a first section (105) fastened to the rail vehicle and a second section (110) configured to introduce a force acting horizontally on the rail vehicle, and the method (300) is carried out by means of a monitoring system (200) according to one of the preceding claims and comprises the following steps of:
- capturing (335, 340) a sensor signal (215) which indicates a change in a distance (s) between the first section (105) and the second section (110);
- determining (335, 340) information relating to the change in the distance (s); and
- storing (335, 340) the information in a data memory (210).

16. Computer program product having program code means which cause the monitoring system according to one of Claims 1-14 to carry out the method steps according to Claim 15.

## Revendications

1. Système de surveillance (200) destiné à un élément d'amortissement (100) sur un véhicule ferroviaire, l'élément d'amortissement (100) comprenant une première portion (105) fixée au véhicule ferroviaire et une deuxième portion (110) conçue pour injecter une force agissant horizontalement sur le véhicule ferroviaire, et le système de surveillance (200) comprenant les éléments suivants :
- un capteur (215) fixé à l'élément d'amortissement (100) et destiné à détecter une variation de distance (s) entre la première portion (105) et la deuxième portion (110) ;
- une mémoire de données (210) ; et
- un dispositif de traitement (205) qui est conçu pour déterminer des informations relatives à la variation de distance (s) et pour les mémoriser dans la mémoire de données (210),
- **caractérisé par**
- un dispositif d'alimentation en énergie local (220, 265) destiné à l'alimentation autonome du dispositif de traitement (205) et comprenant un générateur (265) destiné à produire de l'énergie électrique sur la base d'un mouvement relatif des portions (105, 110), le générateur (265) étant conçu pour convertir par induction l'énergie mécanique en énergie électrique et comprenant une bobine (275), qui est conçue pour être fixée à la première portion (105), et un aimant (280) qui est conçu pour être fixé à la deuxième portion (110), et
- le capteur (215) étant conçu pour déterminer un champ magnétique et pour être fixé à la première portion (105) et comprenant en outre un aimant (280) qui est conçu pour être fixé à la deuxième portion (110),
- le même aimant (280) étant prévu pour influer sur le capteur (215) et la bobine (275).

2. Système de surveillance (200) selon la revendication 1, comprenant en outre un premier élément porteur (285) auquel sont fixés au moins une bobine (275) et au moins un capteur (215), le premier élément porteur (285) étant conçu pour être fixé à l'une des portions (105, 110).

3. Système de surveillance (200) selon l'une des revendications 1 ou 2, l'au moins un aimant (280) étant fixé à un deuxième élément porteur (290), le deuxième élément porteur (290) étant conçu pour être fixé à l'une des portions (105, 110).

4. Système de surveillance (200) selon l'une des revendications précédentes, une pluralité d'aimants (280) et une pluralité de bobines (275) étant prévus et les distances relatives entre les aimants (280) n'étant pas égales aux distances relatives entre les bobines (275), à chaque fois dans la direction de déplacement des portions (105, 110).

5. Système de surveillance (200) selon l'une des revendications précédentes, comprenant en outre un accumulateur d'énergie (220) qui est conçu pour accumuler temporairement l'énergie produite au moyen du générateur (265).

6. Système de surveillance (200) selon l'une des revendications précédentes, comprenant en outre un convertisseur (270) qui est adapté pour traiter l'énergie électrique produite au moyen du générateur (265).

7. Système de surveillance (200) selon l'une des revendications précédentes, l'élément d'amortissement (100) étant conçu pour dissiper d'une manière prédéterminée l'énergie qui modifie la distance (s) entre les portions (105, 110).

8. Système de surveillance (200) selon l'une des revendications précédentes, le capteur (215) étant conçu pour produire un signal (305, 310), en particulier un signal binaire, qui varie lorsque la distance (s) entre la première portion (105) et la deuxième portion (110) varie.

9. Système de surveillance (200) selon l'une des revendications précédentes, le dispositif de traitement (205) comportant une entrée d'interruption (260) à laquelle le signal binaire (305, 310) est appliqué, et le dispositif de traitement (205) étant conçu pour passer d'un état de repos à un état de traitement sur la base d'une interruption afin de traiter les informations.

10. Système de surveillance (200) selon l'une des revendications précédentes, une constante d'amortissement (d) de l'élément d'amortissement (100) étant différente sur des portions (410-425) de la distance (s) et le capteur (215) étant conçu pour détecter si une portion de distance (410-425) est dépassée.

11. Système de surveillance (200) selon l'une des revendications 12 à 14, deux capteurs binaires (215) sont prévus dont les signaux dépendant de la distance sont déphasés et le dispositif de traitement (205) étant conçu pour déterminer une direction de mouvement des portions (105, 110) sur la base des signaux des capteurs (215).

12. Système de surveillance (200) selon l'une des revendications précédentes, comprenant en outre une minuterie (230), le dispositif de traitement (205) étant conçu pour déterminer des informations relatives à une vitesse ou à un instant de la variation de la distance (s) et pour les mémoriser dans la mémoire de données (210).

13. Système de surveillance (200) selon l'une des revendications précédentes, comprenant en outre un dispositif de communication (235) destiné à produire des informations mémorisées dans la mémoire de données (210) au niveau d'une interface (240), le dispositif de communication (235) pouvant être désactivé indépendamment du dispositif de traitement (205).

14. Système de surveillance (200) selon l'une des revendications précédentes, au moins deux états de fonctionnement étant prévus qui présentent des consommations d'énergie différentes et une transition entre les états de fonctionnement étant effectuée en fonction d'un signal du capteur (215).

15. Procédé (300) de surveillance d'un élément d'amortissement (100) sur un véhicule ferroviaire, l'élément d'amortissement (100) comprenant une première portion (105) qui est fixée au véhicule ferroviaire et une deuxième portion (110) qui est conçue pour injecter une force agissant horizontalement sur le véhicule ferroviaire, le procédé (300) étant mis en œuvre au moyen d'un système de surveillance (200) selon l'une des revendications précédentes, et comprenant les étapes suivantes :
- détecter (335, 340) un signal de capteur (215) qui indique une variation de distance (s) entre la première (105) et la deuxième portion (110) ;
- déterminer (335, 340) des informations relatives à la variation de la distance (s) ; et
- mémoriser (335, 340) les informations dans une mémoire de données (210).

16. Progiciel comprenant des moyens de code de programme qui amènent le système de surveillance selon l'une des revendications 1 à 14 à exécuter les étapes de procédé selon la revendication 15.
